# EUROPEAN PATENT APPLICATION

(11) **EP 4 411 449 A1**
(43) Date of publication of application: **07.08.2024**
(21) Application number: 21959472.8
(22) Date of filing: 01.10.2021
(51) Int. Cl.: G02B 13/00, G02B 27/02

(54) **THIN BEAM GENERATION DEVICE**

(71) Applicant: TekJP, Inc., Tokyo 157-0072 (JP)
(72) Inventor: KASAHARA Takeshi, Tokyo 157-0072 (JP)
(74) Representative: Kiwit, Benedikt
(86) International application number: PCT/JP2021/036398
(87) International publication number: WO 2023/053438

(57) **Abstract**

Provided is a thin beam generation device capable of generating a thin beam having a predetermined diameter or less at an arbitrarily defined position on the basis of light emitted from an arbitrarily defined light source. This thin beam generation device comprises a beam shaping means for shaping a line light source. The beam shaping means has a light gathering part, the line light source is disposed on the optical axis of the light gathering part, and the center position on the optical axis of the line light source is disposed at a position more distant from the light gathering part than the focus position of the light gathering part.

## Description

### TECHNICAL FIELD

The present invention relates to a narrow beam generation device.

### BACKGROUND ART

Projector Devices and display devices using light sources such as laser light emitting elements have been known. For example, an integrated photonics module is disclosed that includes one or more light sources, such as lasers, a beam shaping optical element, a coupling optical element, a MEMS scanner, and one or more mechanical components such as an optical frame to facilitate mounting and maintain optical arrangement (for example, see Patent Document 1).

In recent years, glasses-type display devices capable of placing virtual reality images called XRs, such as AR, MR, and VR, in the field of view have been increasing. In particular, a laser scanning method called LBS (laser beam steering) can be applied to a retinal scan display, and a clear image can be seen even by a person with poor vision (for example, see Patent Document 2).

### Citation List

### Patent Document

Patent Document 1: Japanese Unexamined Patent Application (Translation of PCT Application), Publication No. 2009-533715
Patent Document 2: Japanese Unexamined Patent Application, Publication No. H11-064782

### DISCLOSURE OF THE INVENTION

### Problems to be Solved by the Invention

To suitably realize a device such as a retinal scan display as described above, it is necessary to project a high-definition image on a very small area that is a retina. Therefore, the beam scanning the retina preferably has a very small diameter (for example, about 20 µm). However, in conventional technology, for example, since the diameter of the Gaussian beam cannot be a collimated beam of about 300 µm or less, a spot beam condensed at a specific distance has been used as an alternative means. Although the spot beam has a very small beam diameter at a specific distance, the beam diameter at a position around the focal length becomes large. In a glasses-type display device, the distance at which the image reaches the retina varies depending on the individual difference of the wearer of the glasses, and therefore, a fine adjustment mechanism for adjusting the distance is required. On the other hand, a Bessel beam generated by an axicon or the like can be generated only at a position very close to an axicon or the like, and therefore, the Bessel beam cannot be applied to a projector device.

In response to the above issue, an object of the present invention is to provide a narrow beam generation device capable of generating a narrow beam having a predetermined diameter or less at any position based on light emitted from any light source.

### Means for Solving the Problems

(1) The present invention relates to a narrow beam generation device including a beam shaper configured to shape a line light source. The beam shaper includes a condenser. The line light source is arranged on an optical axis of the condenser. The line light source has a center position on the optical axis arranged at a position farther from the condenser than a focal position of the condenser.
(2) The narrow beam generation device according to (1) includes a line light source generator including a light source, a collimator optical system, and an optical axicon.
(3) The narrow beam generation device according to (1) includes a line light source generator including a light source, a collimator optical system, and a lens having an axicon surface. The condenser is a lens having an aspheric surface. The lens having the axicon surface and the lens having the aspherical surface are integrated.
(4) The narrow beam generation device according to (1) includes a line light source generator including a light source, a collimator optical system, and an axicon mirror. The condenser includes a parabolic mirror.
(5) In the narrow beam generation device according to any one of (2) to (4), the collimator optical system emits a plurality of collimated light of different wavelengths.
(6) In the narrow beam generation device according to (5), the collimator optical system includes a plurality of collimator lenses on which light emitted from a plurality of light sources is incident. The narrow beam generation device includes an optical axicon on which the plurality of collimated light of different wavelengths emitted from the plurality of collimator lenses is incident.
(7) In the narrow beam generation device according to any one of (1) to (6), the beam shaper includes an aperture.

### Effects of the Invention

According to the present invention, it is possible to provide a narrow beam generation device capable of generating a narrow beam having a predetermined diameter at any position based on light emitted from any light source.

### BRIEF DESCRIPTION OF THE DRAWINGS

FIG. 1 is a schematic view showing the configuration of a narrow beam generation device according to a first embodiment of the present invention;
FIG. 2 is an enlarged schematic view showing conditions for optical simulation with the narrow beam generation device according to the first embodiment;
FIG. 3 shows simulation results in which light having a wavelength of 520 nm was observed under the conditions of FIG. 2;
FIG. 4 shows simulation results in which light having a wavelength of 450 nm was observed under the conditions of FIG. 2;
FIG. 5 shows simulation results in which light having a wavelength of 638 nm was observed under the conditions of FIG. 2;
FIG. 6 is an enlarged schematic view showing the configuration of a narrow beam generation device according to a second embodiment and conditions for optical simulation therewith;
FIG. 7 shows simulation results in which light having a wavelength of 520 nm was observed under the conditions of FIG. 6;
FIG. 8 shows simulation results in which light having a wavelength of 450 nm was observed under the conditions of FIG. 6;
FIG. 9 shows simulation results in which light having a wavelength of 638 nm was observed under the conditions of FIG. 6;
FIG. 10 is an enlarged schematic view showing the configuration of a narrow beam generation device according to a third embodiment and conditions for optical simulation therewith;
FIG. 11 shows simulation results in which light having a wavelength of 520 nm was observed under the conditions of FIG. 10; and
FIG. 12 is a schematic view showing the configuration of a narrow beam generation device according to a fourth embodiment.

### PREFERRED MODE FOR CARRYING OUT THE INVENTION

An embodiment of the present invention will now be described with reference to the drawings. The present invention is not limited to the following embodiment.

### <<First Embodiment>>

### <Configuration of Narrow Beam Generation Device>

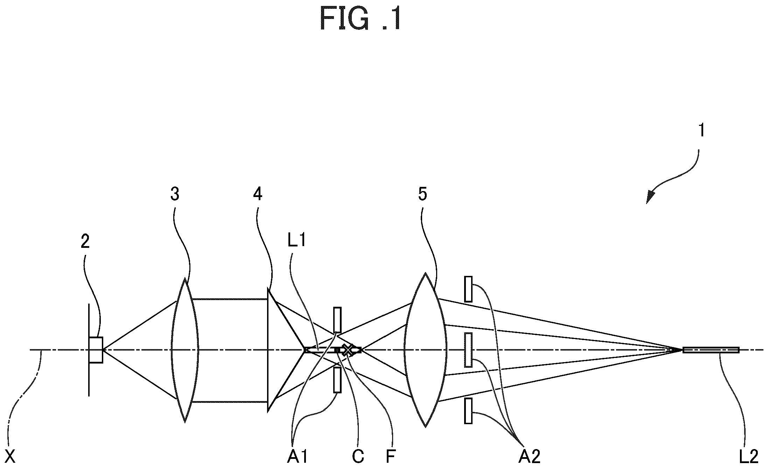

As shown in FIG. 1, a narrow beam generation device 1 according to the present embodiment includes a light source 2, a collimator optical element 3, an axicon lens 4, a condenser lens 5, and apertures A1 and A2. In the present embodiment, the light source 2, the collimator optical element 3, and the axicon lens 4 correspond to a line light source generator for generating a line light source L1, and the condenser lens 5 as a condenser and the apertures A1 and A2 correspond to a beam shaper.

In the present embodiment, the collimator optical element 3, the axicon lens 4, and the condenser lens 5 are arranged such that the optical axes thereof are substantially the same optical axis X. The line light source L1 generated on the optical axis X is shaped by the condenser lens 5, and a narrow beam L2 is generated at a predetermined position. The predetermined position at which the narrow beam L2 is generated can be, for example, any position separated from the condenser lens 5 by several tens of mm or more. Since the length of the narrow beam L2 is infinite in principle, the position at which the narrow beam L2 is generated can be substantially any position. The center of the optical axis of the line light source L1 does not necessarily have to be at the axial center of the optical axis X, and may be slightly misaligned.

Since the application of the narrow beam generation device 1 capable of generating the narrow beam L2 is not limited, and the diameter and generation position of the narrow beam L2 can be freely designed, the narrow beam generation device 1 can be applied to various projector devices, display devices, laser processing devices, illumination devices, optical communication devices, optical memory devices, optical information processing devices, and the like. In particular, the beam diameter of the narrow beam L2 can be equal to or smaller than a predetermined size, the beam hardly diverges over a predetermined length (in principle, to infinity) in the direction of the optical axis X, and adjustment of the focal position is unnecessary. Therefore, the narrow beam generation device 1 can be preferably applied to a retinal scan display. The beam diameter of the narrow beam L2 can be, for example, 50 µm or less, 20 µm or less, or 10 µm or less.

The light source 2 is any light source such as a semiconductor laser (LD), LED, or surface light source. The light source 2 is not limited, and any light source can be used because neither spatial coherence nor temporal coherence is required. The light source 2 may be capable of adjusting and modulating light intensity with a light source driver or the like serving as a power source. As the light source 2, a plurality of light sources that emit light of the same wavelength or different wavelengths may be provided. For example, as in a fourth embodiment described later, a plurality of light sources may be used to multiplex RGB light.

The collimator optical element 3 serving as a collimator optical system is an optical element on which light emitted from the light source 2 is incident. The collimator optical element 3 converts the incident light into collimated light substantially parallel to the optical axis X and emits the collimated light. Examples of the collimator optical element 3 as the collimator optical system include a collimator lens, a mirror, and a diffractive optical element (DOE). The diffractive optical element has a fine concave-convex structure on the surface, and can spatially branch light by utilizing a diffraction phenomenon of light and output light of a desired pattern and shape. When a plurality of light sources 2 are provided, a plurality of collimator optical elements 3 are provided according to the number of light sources 2. Although a collimator optical system is used for a light source having divergence characteristics, a collimator optical system may not be used for a light source having no divergence characteristics, and the light may be incident directly or by using a beam expander to match a subsequent optical system.

The axicon lens 4 is a lens on which collimated light generated by the collimator optical element 3 is vertically incident, and emits light from the vertex of the axicon surface formed on the emission side. The light emitted from the axicon lens 4 is condensed on the optical axis X in a ring shape, and the line light source L1 having a predetermined length along the optical axis X is emitted from the vertex of the axicon surface. Instead of the axicon lens 4, a diffractive optical element (DOE) lens having similar optical characteristics may be used. In the present embodiment, the line light source L1 generated by the line light source generator is a real image, but the line light source L1 includes a virtual image.

The line light source generator can be any means capable of generating a line light source L1, and is not limited to the light source 2, collimator optical element 3, and axicon lens 4 described above. For example, it may be a line light source generator according to another embodiment described later. Alternatively, a linear light emitting source such as a light emitting fiber may be used as the line light source generator.

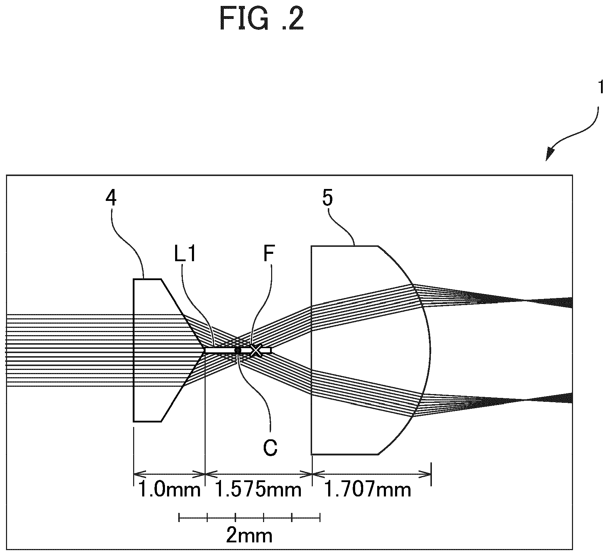

The condenser lens 5 serving as the condenser is a beam shaper, and shapes the line light source L1 emitted from the axicon lens 4 to generate the narrow beam L2 at any position. The condenser lens 5 is not limited as long as it has a condensing function with respect to incident light. For example, a plano-convex lens having one aspherical surface on one side as shown in FIG. 2, or a biconvex lens having both aspherical surfaces on both sides can be used. The condenser is not limited to a condenser lens, and a parabolic mirror as in another embodiment described later may be used.

A center position C of the line light source L1 on the optical axis X generated by the line light source generator is arranged at a position farther from the condenser lens 5 as the condenser than a focal position F of the condenser lens 5. Thus, the narrow beam L2 having a diameter equal to or smaller than a predetermined size can be generated without divergence. The narrow beam L2 hardly diverges for a predetermined length (in principle, to infinity) in the direction of the optical axis X from the generation position thereof, and the diameter equal to or smaller than the predetermined size is maintained. If the center position C of the line light source L1 is arranged closer to the condenser lens 5 than the focal position F, the light emitted from the condenser lens 5 will diverge, and a narrow beam cannot be efficiently generated. As the distance between the center position C and the condenser lens 5 is increased, the narrow beam L2 can be generated closer to the condenser lens 5. Thus, by adjusting the relative position of the center position C with respect to the focal position F, any position can be set as the generation position of the narrow beam L2.

The apertures A1 and A2 are members having hole parts (light transmission parts) through which the line light source L1 passes, and are a beam shaper for shaping the line light source L1. The apertures A1 and A2 can remove unnecessary light emitted from the axicon lens 4. The aperture A1 can be arranged, for example, at a position corresponding to the center position C in the direction of the optical axis X, and the hole part of the aperture A1 can have the same diameter as that of the line light source L1 emitted from the axicon lens 4. The aperture A2 has a ring-shaped hole part through which the line light source L1 diverging in a ring shape can pass. The aperture A2 can be realized, for example, by masking a part of the surface of the condenser lens 5 into a ring shape. Although the aperture A2 is provided on the emission side of the condenser lens 5 in FIG. 1, the aperture A2 may be provided on the incidence side of the condenser lens 5. As for the above apertures, only one of the apertures A1 and A2 may be used.

### <Optical Simulation Results>

FIG. 2 shows conditions under which optical simulation with the narrow beam generation device 1 according to the first embodiment was performed using optical design software ZEMAX (registered trademark) (manufactured by ZEMAX Development Corporation).

The axicon lens 4 shown in FIG. 2 has an inclination angle of 33°. A plano-convex lens (effective diameter: 3.0 mm) having an aspherical surface on one side was used as the condenser lens 5. As shown in FIG. 2, the length of the axicon lens 4 on the optical axis X is 1.0 mm, and the length of the condenser lens 5 on the optical axis X is 1.707 mm. The distance between the axicon lens 4 and the condenser lens 5 is 1.575 mm. The focal position F of the condenser lens 5 is located on the optical axis X and 0.93 mm to the left from the incident surface (planar surface) of the condenser lens 5. The line light source L1 is distributed from the vertex of the axicon lens 4 to the right over a length of 0.9 mm on the optical axis X. Therefore, the center position C of the line light source L1 exists on the optical axis X and 0.45 mm to the right from the vertex of the axicon lens 4 (on the optical axis X and 1.125 mm to the left from the incident surface (planar surface) of the condenser lens 5). Therefore, the center position C of the line light source L1 is arranged at a position farther from the condenser lens 5 than the focal position F of the condenser lens 5.

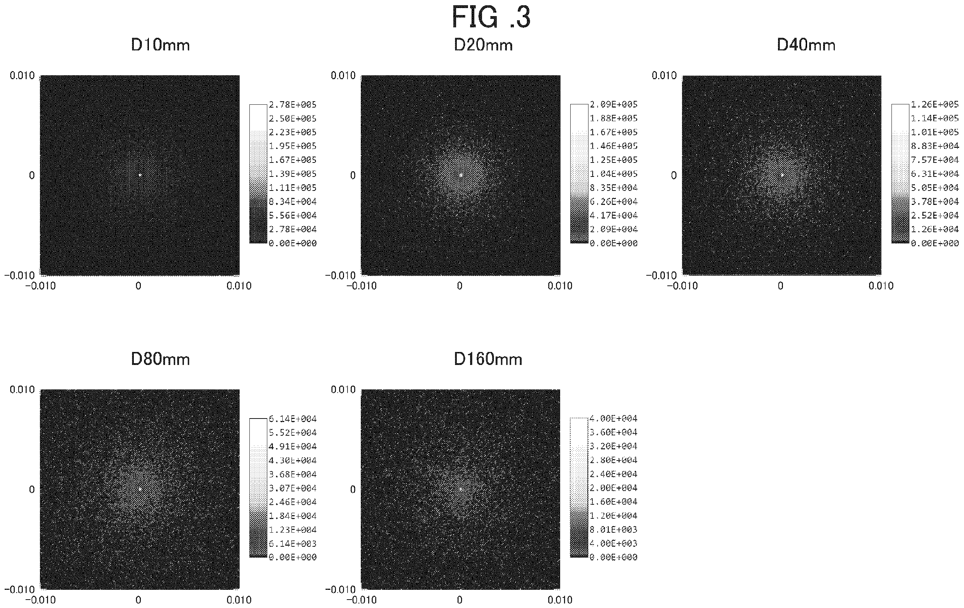

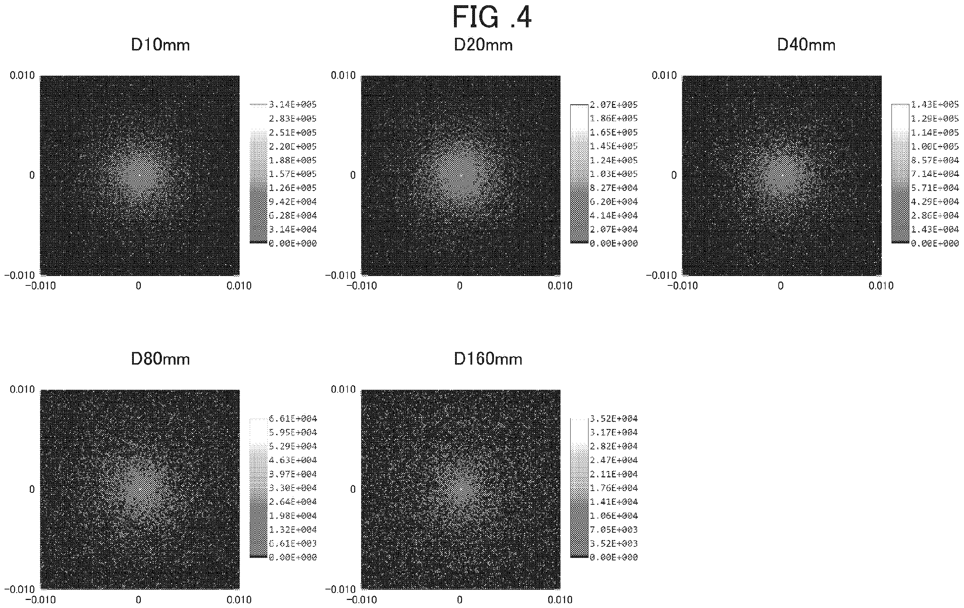

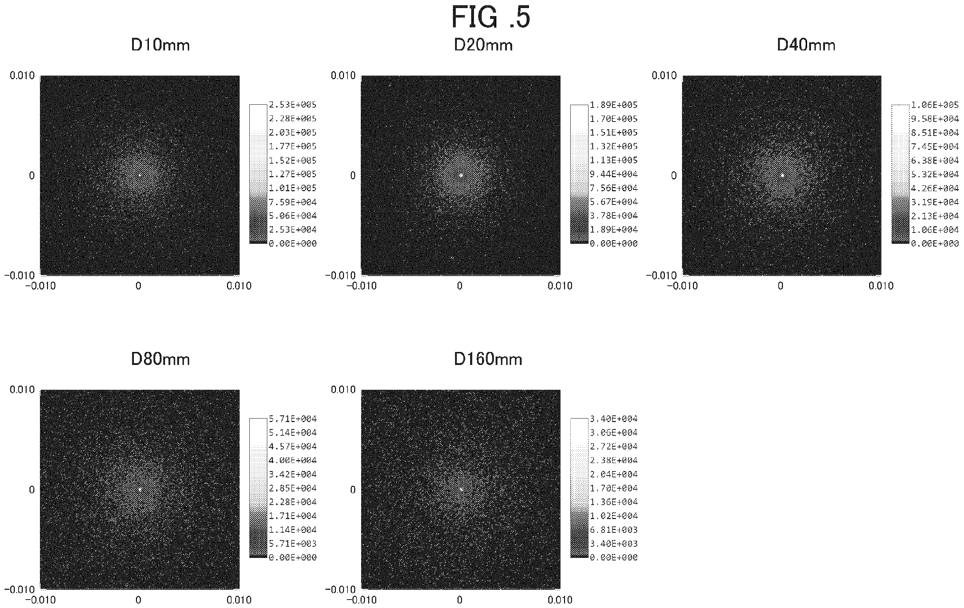

FIGS. 3 to 5 each show the results of outputting the irradiance distribution by the optical simulation with a detector installed on a plane perpendicular to the optical axis X at positions where the distance D from the emission-side end surface of the condenser lens 5 is 10 mm, 20 mm, 40 mm, 80 mm, and 160 mm. In FIG. 3, the wavelength of the collimated beam (beam diameter: 1.0 mm) from the collimator lens incident on the axicon lens 4 was set to 520 nm, and similarly, in FIG. 4, the wavelength was set to 450 nm, and similarly, in FIG. 5, the wavelength was set to 638 nm. FIGS. 3 to 5 show the distribution of the irradiance proportional to the intensity of the incident light to the detector, meaning that the irradiance is higher at a brighter portion of the color. In the output results of FIGS. 3 to 5, the vertical axis and the horizontal axis correspond to the detector size (20 µm per side) (unit: mm), and the center (vertical axis = o, horizontal axis = o) corresponds to the position of the optical axis X.

It is clear from the results of FIGS. 3 to 5 that the generated narrow beams all form a spot where most of the irradiance is concentrated in a range of several µm around the optical axis X. The diameters of the spots are substantially constant regardless of the distance from the condenser lens 5. As a result, it was confirmed that a narrow beam having a diameter of several µm was generated at least in a range where the distance D from the condenser lens 5 was 10 mm to 160 mm. Similar phenomena were obtained at wavelengths of 520 nm, 450 nm, and 638 nm, confirming that a narrow beam could be generated with green, blue, and red light.

Hereinafter, another embodiment of the present invention will be described. The descriptions of the same features as in the first embodiment may be omitted.

### <<Second Embodiment>>

### <Configuration of Narrow Beam Generation Device>

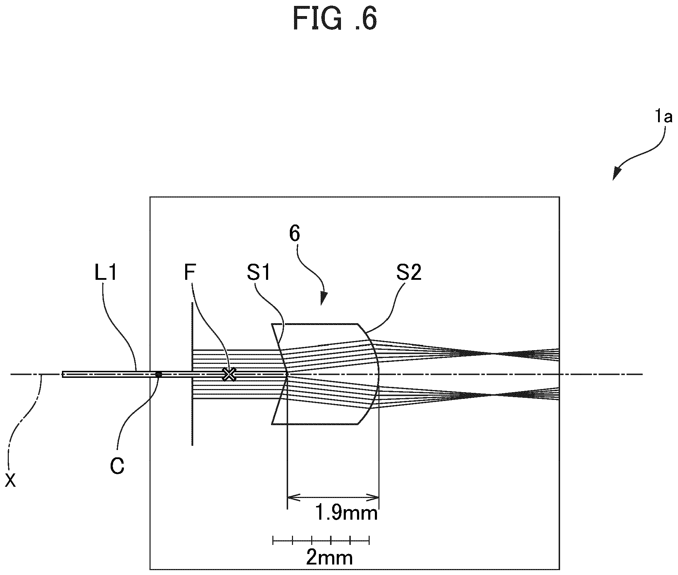

As shown in FIG. 6, a narrow beam generation device 1a according to a second embodiment includes an integrated lens 6 in which an incident surface S1 is a concave axicon surface and an emitting surface S2 is an aspherical surface. The features of the narrow beam generation device 1a other than the above are the same as those of the first embodiment. That is, collimated light generated by the same light source and collimator optical system as those in the first embodiment is incident on the incident surface S1. In the present embodiment, the lens 6 serves as both a line light source generator and a condenser. The line light source L1 generated by the lens 6 is a virtual image generated on the incidence side of the lens 6. Also in the present embodiment, the center position C of the line light source L1 on the optical axis X is arranged at a position farther from the emitting surface S2 as the condenser than the focal position F of the emitting surface S2. Thus, the narrow beam L2 having a diameter equal to or smaller than a predetermined size can be generated without divergence.

### <Optical Simulation Results>

FIG. 6 shows the configuration of the narrow beam generation device 1a according to the second embodiment, and conditions under which optical simulation with the narrow beam generation device 1a was performed using optical design software ZEMAX (registered trademark) (manufactured by ZEMAX Development Corporation).

The lens 6 shown in FIG. 6 has an effective diameter of 2.0 mm and an inclination angle of the incident surface S1 (concave axicon surface) of 19°. As shown in FIG. 6, the distance between the vertex of the incident surface S1 (concave axicon surface) and the emitting end surface of the emitting surface S2 is 1.9 mm. The focal position F of the emitting surface S2 is located on the optical axis X and 1.4 mm to the left from the vertex of the incident surface S1 (concave axicon surface). The line light source L1 that is a virtual image is distributed from the vertex of the incident surface S1 (concave axicon surface) to the left over a length of 4.4 mm on the optical axis X. Therefore, the center position C of the line light source L1 exists on the optical axis X and 2.2 mm to the left from the vertex of the incident surface S1 (concave axicon surface). Therefore, the center position C of the line light source L1 is arranged at a position farther from the condenser than the focal position F of the condenser.

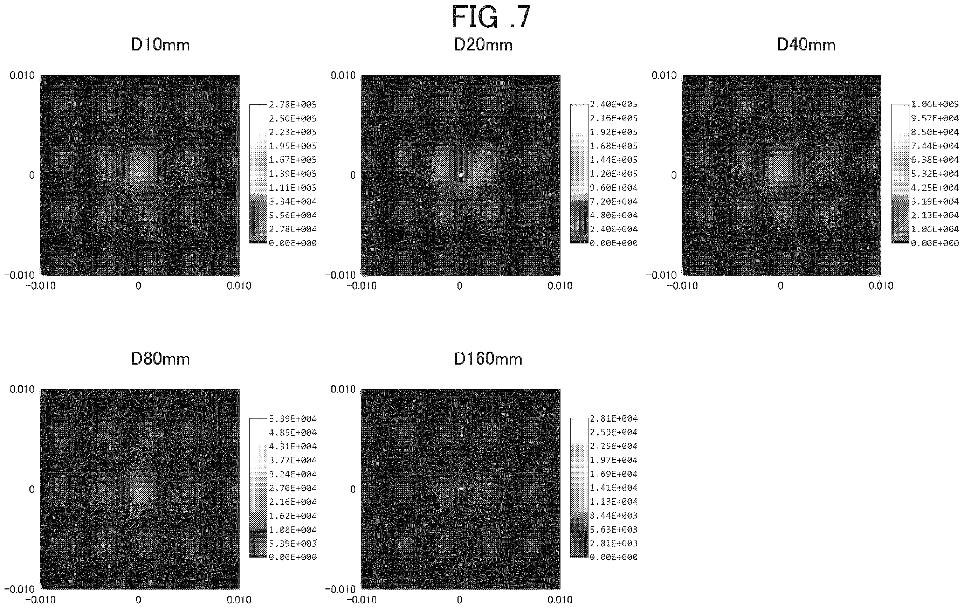

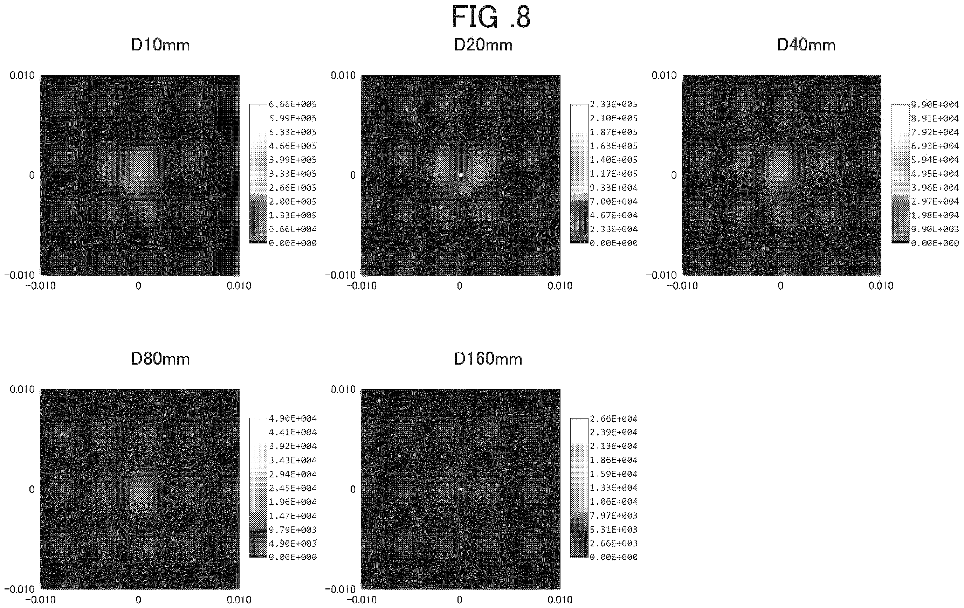

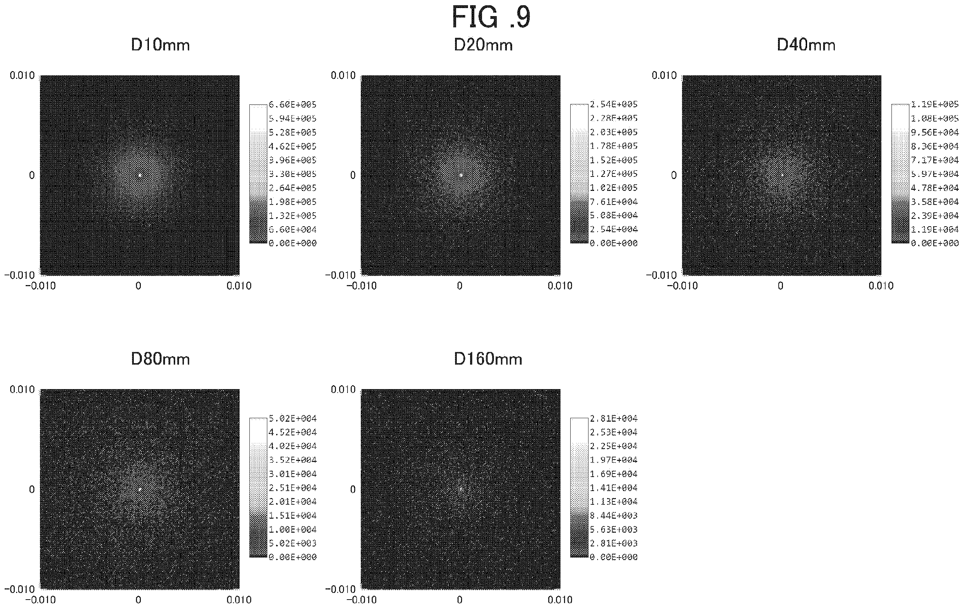

As in FIGS. 3 to 5, FIGS. 7 to 9 each show the results of outputting the irradiance distribution by the optical simulation with a detector installed on a plane perpendicular to the optical axis X at positions where the distance D from the emitting end surface of the emitting surface S2 is 10 mm, 20 mm, 40 mm, 80 mm, and 160 mm. In FIG. 7, the wavelength of the collimated beam (beam diameter: 1.0 mm) from the collimator lens incident on the incident surface S1 (concave axicon surface) was set to 520 nm, and similarly, in FIG. 8, the wavelength was set to 450 nm, and similarly, in FIG. 9, the wavelength was set to 638 nm. Other conditions are the same as those in FIGS. 3 to 5.

It is clear from the results of FIGS. 7 to 9, as in FIGS. 3 to 5, that the narrow beams generated by the narrow beam generation device 1a all form a spot where most of the irradiance is concentrated in a range of several µm around the optical axis X. The diameters of the spots are substantially constant regardless of the distance from the emitting surface S2. As a result, it was confirmed that a narrow beam having a diameter of several µm was generated at least in a range where the distance D from the emitting surface S2 was 10 mm to 160 mm. Similar phenomena were obtained at wavelengths of 520 nm, 450 nm, and 638 nm, confirming that a narrow beam could be generated with green, blue, and red light.

### < <Third Embodiment>>

### <Configuration of Narrow Beam Generation Device>

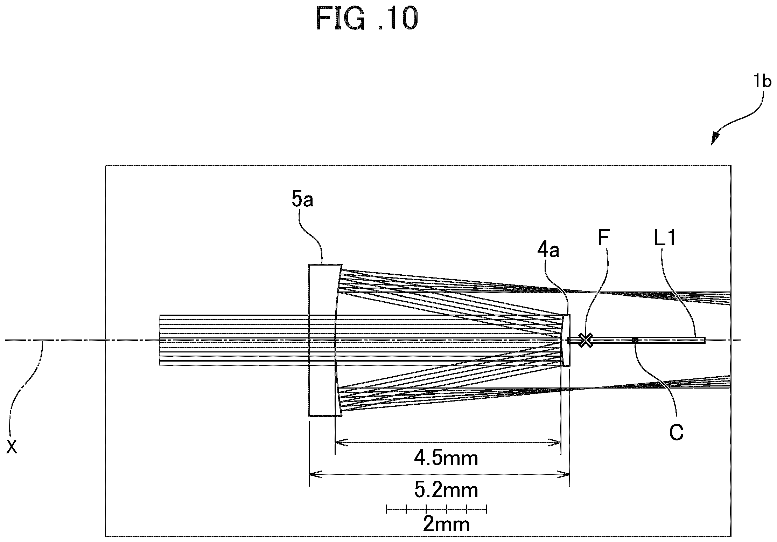

As shown in FIG. 10, a narrow beam generation device 1b according to a third embodiment includes a convex axicon mirror 4a and a parabolic mirror 5a. The features of the narrow beam generation device 1b other than the above are the same as those of the first embodiment. That is, collimated light generated by the same light source and collimator optical system as those in the first embodiment is incident on the convex axicon mirror 4a. The light reflected by the convex axicon mirror 4a is incident on the parabolic mirror 5a. In the present embodiment, the convex axicon mirror 4a is a line light source generator, and the parabolic mirror 5a is a condenser in the beam shaper. In the present embodiment, the line light source L1 generated by the convex axicon mirror 4a is a virtual image generated on the side opposite to the reflected light of the convex axicon mirror 4a. Also in the present embodiment, the center position C of the line light source L1 on the optical axis X is arranged at a position farther from the parabolic mirror 5a as the condenser than the focal position F of the parabolic mirror 5a. Thus, the narrow beam L2 having a diameter equal to or smaller than a predetermined size can be generated without divergence.

### <Optical Simulation Results>

FIG. 10 shows the configuration of the narrow beam generation device 1b according to the third embodiment, and conditions under which optical simulation with the narrow beam generation device 1b was performed using optical design software ZEMAX (registered trademark) (manufactured by ZEMAX Development Corporation).

The convex axicon mirror 4a shown in FIG. 10 has an effective diameter of 1.0 mm and an inclination angle of the axicon surface of 5.66°. The parabolic mirror 5a has an effective diameter of 3.0 mm. As shown in FIG. 10, the distance between the vertex of the convex axicon mirror 4a and the incident surface of the parabolic mirror 5a is 4.5 mm. As shown in FIG. 10, the distance between the end surface of the convex axicon mirror 4a on the side opposite to the incident surface thereof and the end surface of the parabolic mirror 5a on the side opposite to the incident surface thereof is 5.2 mm. The focal position F of the parabolic mirror 5a is located on the optical axis X and 0.3 mm to the right from the vertex of the convex axicon mirror 4a. The line light source L1 that is a virtual image is distributed from the vertex of the convex axicon mirror 4a to the right over a length of 2.5 mm on the optical axis X. Therefore, the center position C of the line light source L1 exists on the optical axis X and 1.25 mm to the right from the vertex of the convex axicon mirror 4a. Therefore, the center position C of the line light source L1 is arranged at a position farther from the condenser than the focal position F of the condenser.

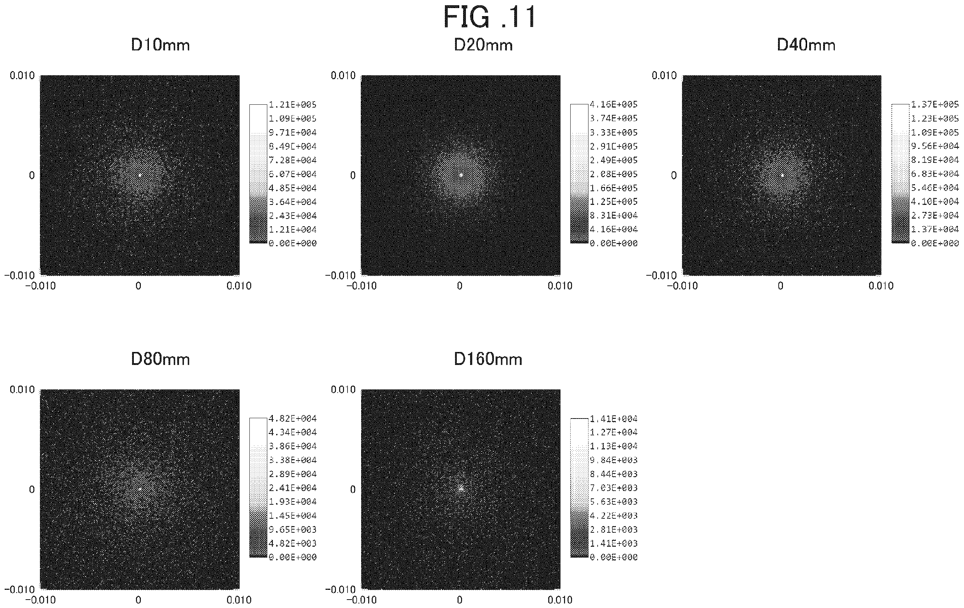

As in FIG. 3, FIG. 11 shows the results of outputting the irradiance distribution by the optical simulation with a detector installed on a plane perpendicular to the optical axis X at positions where the distance D from the end surface of the convex axicon mirror 4a on the side opposite to the incident surface thereof is 10 mm, 20 mm, 40 mm, 80 mm, and 160 mm. In FIG. 11, the wavelength of the collimated beam (beam diameter: 1.0 mm) from the collimator lens incident on the convex axicon mirror 4a was set to 520 nm. Since the optical characteristics of the reflection optical system do not depend on the wavelength of the incident light, simulation results of other wavelengths are omitted.

It is clear from the results of FIG. 11, as in FIG. 3, that the narrow beams generated by the narrow beam generation device 1b all form a spot where most of the irradiance is concentrated in a range of several µm around the optical axis X. The diameters of the spots are substantially constant regardless of the distance from the convex axicon mirror 4a. As a result, it was confirmed that a narrow beam having a diameter of several µm was generated at least in a range where the distance D from the convex axicon mirror 4a was 10 mm to 160 mm.

### <<Fourth Embodiment>>

### < Configuration of Narrow Beam Generation Device>

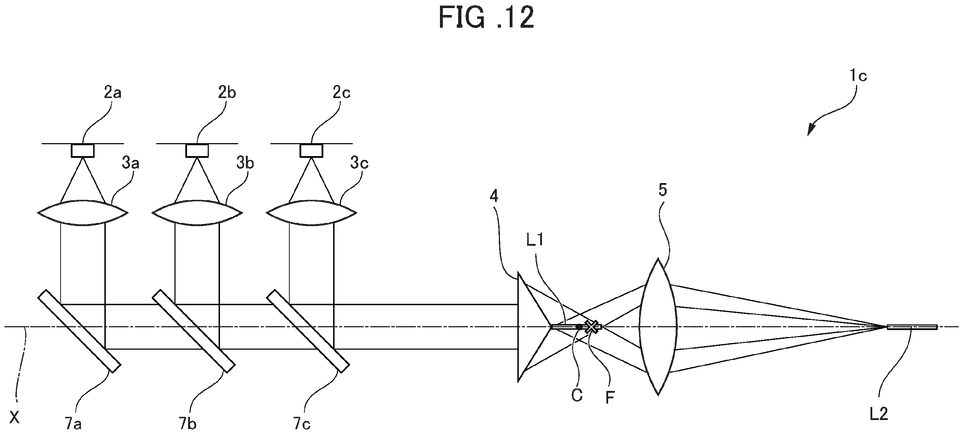

As shown in FIG. 12, a narrow beam generation device 1c according to the present embodiment includes a plurality of light sources 2a, 2b, and 2c, a plurality of collimator optical elements 3a, 3b, and 3c, dichroic mirrors 7a, 7b, and 7c as multiplexing means, an axicon lens 4, and a condenser lens 5.

The plurality of light sources 2a, 2b, and 2c are, for example, light sources corresponding to RGB, respectively, and each emit light of a different wavelength. The narrow beam generation device 1c includes the plurality of light sources 2a, 2b, and 2c, the plurality of collimator optical elements 3a, 3b, and 3c, and the dichroic mirrors 7a, 7b, and 7c as the multiplexing means, as a line light source generator, multiplexes light of different wavelengths, and make the light incident on the single axicon lens 4. This enables light of different wavelengths to be multiplexed. Furthermore, the light emitted from the axicon lens 4 is non-deviating light emitted from the vertex of the axicon surface along the optical axis X even when the optical axis of the collimated light emitted from each of the plurality of collimator optical elements 3a, 3b, and 3c is slightly misaligned with each other. Therefore, when the narrow beam generation device 1c is used as a projector device, extremely clear images can be obtained without the need for correction of deviation.

The dichroic mirrors 7a, 7b, and 7c as the multiplexing means use interference of light to transmit light in a specific wavelength region and reflect light in the remaining wavelength region. The multiplexing means is not limited to the dichroic mirror, and other multiplexing means such as a dichroic prism, a PLC (planar lightwave circuit), a reflection mirror, and an optical fiber may be used.

Although the preferred embodiments of the present invention have been described above, the present invention is not limited to the above embodiments and can be modified as appropriate.

In the second and third embodiments of the above embodiments, only the main components have been described, but the second and third embodiments are not limited to the above, and combinations with the features disclosed in the first or fourth embodiment are also possible. For example, a plurality of light sources and multiplexing means, or apertures A1 and A2 may be combined with the configurations of the second and third embodiments.

In the above embodiment, the beam diameter of the narrow beam L2 generated by the narrow beam generation device can be set to, for example, 50 µm or less, but is not limited to the above. The present invention can also be utilized as a long-distance beam generation device that maintains a beam diameter as an application outside the purpose of generating a narrow beam, by utilizing the mechanism of generating a narrow beam of the narrow beam generation device according to the above embodiment.

### EXPLANATION OF REFERENCE NUMERALS

1, 1a, 1b, 1c narrow beam generation device
2 light source
3 collimator optical element (collimator optical system)
4 axicon lens
4a convex axicon mirror (axicon mirror)
5 condenser lens (condenser)
5a parabolic mirror (condenser)
6 integrated lens
S1 concave axicon surface (axicon surface)
S2 aspherical surface
A1, A2 aperture
L1 line light source
L2 narrow beam
X optical axis

## Claims

1. A narrow beam generation device comprising:
a beam shaper configured to shape a beam emitted from a line light source,
the beam shaper comprising a condenser,
the line light source being arranged on an optical axis of the condenser, and
the line light source having a center position on the optical axis arranged at a position farther from the condenser than a focal position of the condenser.

2. The narrow beam generation device according to claim 1, comprising a line light source generator comprising a light source, a collimator optical system, and an optical axicon.

3. The narrow beam generation device according to claim 1,
wherein the narrow beam generation device comprises a line light source generator comprising a light source, a collimator optical system, and a lens having an axicon surface,
wherein the condenser is a lens having an aspheric surface, and
wherein the lens having the axicon surface and the lens having the aspherical surface are integrated.

4. The narrow beam generation device according to claim 1,
wherein the narrow beam generation device comprises a line light source generator comprising a light source, a collimator optical system, and an axicon mirror, and
wherein the condenser comprises a parabolic mirror.

5. The narrow beam generation device according to any one of claims 2 to 4, wherein the collimator optical system emits a plurality of collimated light of different wavelengths.

6. The narrow beam generation device according to claim 5,
wherein the collimator optical system comprises a plurality of collimator lenses on which light emitted from a plurality of light sources is incident, and
wherein the narrow beam generation device comprises an optical axicon on which the plurality of collimated light of different wavelengths emitted from the plurality of collimator lenses is incident.

7. The narrow beam generation device according to any one of claims 1 to 6, wherein the beam shaper comprises an aperture.
